# EUROPÄISCHE PATENTSCHRIFT

(11) **EP 3 347 167 B1**
(45) Veröffentlichungstag und Bekanntmachung des Hinweises auf die Patenterteilung: **11.09.2019**
(21) Anmeldenummer: 16741014.1
(22) Anmeldetag: 19.07.2016
(51) Int. Cl.: B25H 3/00, B65D 25/10

(54) **STAPELVORRICHTUNG ZUM STAPELN VON LACK- UND MONTAGESTOPFEN**
STACKING DEVICE FOR STACKING PAINT AND INSTALLATION PLUGS
DISPOSITIF D'EMPILAGE POUR EMPILER DES OBTURATEURS DE PEINTURE ET DE MONTAGE

(30) Priorität: 09.09.2015 DE 102015217208
(43) Veröffentlichungstag der Anmeldung: 18.07.2018
(73) Patentinhaber: Bayerische Motoren Werke Aktiengesellschaft, 80809 München (DE)
(72) Erfinder: KOSSMANN, Max, 81675 München (DE); SCHÖNHERR, Ralf, 85540 Haar (DE); SCHMIEDEL, Ingo, 85250 Altomünster / Asbach (DE)
(86) Internationale Anmeldenummer: PCT/EP2016/067197
(87) Internationale Veröffentlichungsnummer: WO 2017/041947

(56) Entgegenhaltungen:
- DE-A1-102012 013 590
- DE-T5-112012 007 007
- DE-U1-202014 005 960
- US-A- 4 160 504

## Beschreibung

Die Erfindung betrifft eine Stapelvorrichtung zum Stapeln von Stopfen, insbesondere Lack- oder Montagestopfen für Kraftfahrzeuge, sowie ein System bestehend aus der Stapelvorrichtung und einer Stopfenhalteeinrichtung.

Damit bei Karosseriebauteilen nach dem Lackieren der flüssige Lack wieder schnell aus den Hohlräumen abfließen kann, werden diese mit zahlreichen, teilweise bis zu mehreren Hundert Öffnungen versehen. Auch zum Setzen von Schweißpunkten sind Löcher vorzusehen. Durch diese Öffnungen kann zudem Wachs in die Hohlräume eingespritzt werden, um das Karosseriebauteil zu versiegeln. Sämtliche Öffnungen müssen während der Montage wieder verschlossen werden, um das Eindringen von Feuchtigkeit bzw. Wasser zu verhindern und das Fahrzeug während des Betriebs vor Korrosion zu schützen. Die Öffnungen werden mit sogenannten Stopfen aus Hart-Kunststoff verschlossen, welche es in verschiedenen Durchmessern gibt.

Die Stopfen sind zumeist rund und weisen einen ein Loch abdeckenden Kopf und eine radial weiter innen liegende Befestigungseinrichtung auf, die durch das Loch hindurchgeführt wird und Randabschnitte des Loches befestigend hintergreift.

Zum Setzen der Stopfen gibt es Werkzeuge mit einem Stopfenmagazin, in das axial in Reihe angeordnete Stopfen eingeführt werden. Um zu vermeiden, dass die Stopfen dem Werkzeug einzeln zugeführt werden müssen, ist eine Vorabstapelung der Stopfen wünschenswert. Die Stapelung der Stopfen zu automatisieren ist jedoch kostenintensiv und fehleranfällig. Zudem müsste für jede Stopfenbauart ein eigener Prozess entwickelt werden.

Weiterer Stand der Technik auf diesem Gebiet wird beispielsweise durch die DE 10 2012 013590 A1 offenbart.

Der Erfindung liegt deshalb die Aufgabe zugrunde, eine Stapelvorrichtung zum vereinfachten Stapeln für Stopfen bereitzustellen, aus der das Werkzeugmagazin befüllbar ist. Zudem ist es Aufgabe der Erfindung, ein System bereit zu stellen, mittels dem die Stapelvorrichtung einfach mit Stopfen gefüllt werden kann, bis ein Stopfenstapel mit vordefinierter Stopfenzahl gebildet ist.

Diese Aufgaben werden durch die Merkmalskombinationen gemäß der Patentansprüche 1 und 9 gelöst.

Erfindungsgemäß wird eine Stapelvorrichtung für Stopfen, insbesondere Lack- oder Montagestopfen für Kraftfahrzeuge, mit einem Gehäuse gemäß Anspruch 1 vorgeschlagen, das an zumindest einem axialen Ende an einer Vorderseite eine Öffnung aufweist, und in dem sich in axialer Richtung an einer Innenwand des Gehäuses mindestens zwei Halte- und Führungsmittel für die Stopfen erstrecken, die ausgebildet sind, die Stopfen gestapelt in Position zu halten, eine Axialbewegung der Stopfen zuzulassen und diese in axialer Richtung zu führen.

Die Stopfen können mit und in der Stapelvorrichtung gestapelt werden, wobei die Stopfen über die Öffnung an der Vorderseite in das Innere des Gehäuses zuführbar sind. Das Werkzeug zum Stopfensetzen kann in die Öffnung hineinfahren und die gestapelten Stopfen entnehmen und seinem Magazin zuführen. Das Werkzeug wird über Roboter oder manuell geführt. Die Halte- und Führungsmittel gewährleisten einen Stapel zueinander ausgerichteter Stopfen in einer axialen Linie, die aus der Stapelvorrichtung unmittelbar in das Werkzeugmagazin überführbar sind.

Die Halte- und Führungsmittel für die Stopfen sind vorzugsweise elastisch, so dass die Stopfen darin einen Eingriff finden. In einer bevorzugten Ausführungsvariante ist vorgesehen, dass die Halte- und Führungsmittel aus Schaumstoff gebildet sind.

Ferner ist eine Ausführung vorteilhaft, bei der die Stapelvorrichtung dadurch gekennzeichnet ist, dass insgesamt vier Halte- und Führungsmittel vorgesehen sind, von denen jeweils zwei sich gegenüberliegend angeordnet sind. Die Stopfen werden dadurch ausreichend gegen ungewolltes axiales verrutschen gesichert und stabil geführt.

In einer günstigen Ausführungsvariante ist vorgesehen, dass das Gehäuse einen achteckigen Querschnitt aufweist. Dies bietet den Vorteil einer guten Packbarkeit in Standardpaketen sowie jeweils zueinander weisende Flächen für die Halte- und Führungsmittel.

Bei der erfindungsgemäßen Stapelvorrichtung ist eine Ausführung günstig, bei der die Halte- und Führungsmittel einen dreieckigen oder ovalen Querschnitt aufweisen und sich im Wesentlichen über die gesamte axiale Länge des Gehäuses erstrecken. Hierbei ist vorteilhaft, wenn eine Spitze des dreieckigen Querschnitts der jeweiligen Halte- und Führungsmittel jeweils in Richtung einer axialen Mittellinie der Stapelvorrichtung weist. Bei den Halte- und Führungsmitteln müssen beide Funktionen Halten und Führen der Stopfen sichergestellt sein. Die zur Mittellinie weisenden Dreiecksspitzen bieten eine gute Verdrängbarkeit durch die Stopfen und ermöglichen somit ein leichtes gleiten der Stopfen in axialer Richtung. Gleichzeitig verkeilen sich die Stopfen ausreichend fest, dass sie nicht aus dem Gehäuse herausfallen.

Erfindungsgemäß ist zudem vorgesehen, dass die Öffnung in einer quadratischen Platte gebildet ist, die an einem axialen Ende des Gehäuses befestigt ist. Die Platte bietet einen sicheren Stand für die Stapelvorrichtung und ragt über radiale Randabschnitte des Gehäuses hinaus.

Zur Befestigung der Halte- und Führungsmittel ist in einer kostengünstigen und stabilen Ausführung vorgesehen, dass die Öffnung an ihrer Umfangskante Kerben aufweist, durch die das Halte- und Führungsmittel einführbar und/oder in denen das jeweilige Halte- und Führungsmittel gehalten ist. Zudem können die Halte- und Führungsmittel in dem Gehäuse verklebt oder über eine Nut-Federverbindung fixiert sein.

Erfindungsgemäß ist an der Stapelvorrichtung an beiden axialen Enden des Gehäuses eine Platte mit jeweils einer Öffnung an der Vorderseite vorgesehen.

Auch Bestanteil der Erfindung ist ein System zum Stapeln von Stopfen, insbesondere der Lack- oder Montagestopfen für Kraftfahrzeuge, bestehend aus einer vorstehend beschriebenen Stapelvorrichtung und einer Stopfenhalteeinrichtung. Die Stopfenhalteeinrichtung weist einen vorspringenden Abschnitt auf, auf dem mindestens ein Stopfen unbefestigt aufgelegt werden kann. Der vorspringende Abschnitt ist mit dem aufliegenden Stopfen von der mindestens einen Öffnung überstülpbar und mit dem Stopfen in axialer Richtung in ein Inneres des Gehäuses der Stapelvorrichtung einführbar. Durch die Halte- und Führungsmittel im Inneren des Gehäuses wird der bzw. werden die Stopfen gehalten während die Stapelvorrichtung von der Stopfenhalteeinrichtung wegbewegt wird. Nach Abschluss der Überstülpung und dem Wegbewegen der Stapelvorrichtung wird ein neuer Stopfen auf die Stopfenhalteeinrichtung gelegt und die Stapelvorrichtung wieder überstülpt. Dieser Schritt wird mehrfach wiederholt. Nach und nach füllt sich somit das Gehäuse mit Stopfen in einer axialen Reihe. Dabei verhindert das Halte- und Führungsmittel das Herausfallen der Stopfen aus der Stapelvorrichtung. Zudem werden die Stopfen in axialer Richtung geführt und liegen jeweils parallel zueinander innerhalb des Gehäuses.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht der Stapelvorrichtung;
- Fig. 2: eine Schnittansicht der Stapelvorrichtung aus Figur 1;
- Fig. 3: eine Ansicht der Stapelvorrichtung aus Figur 1 von unten.

Gleiche Bezugszeichen benennen gleiche Teile in allen Ansichten.

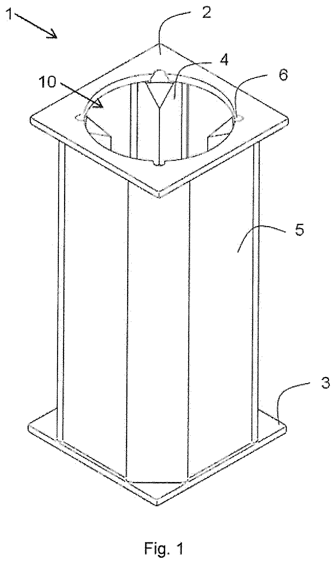

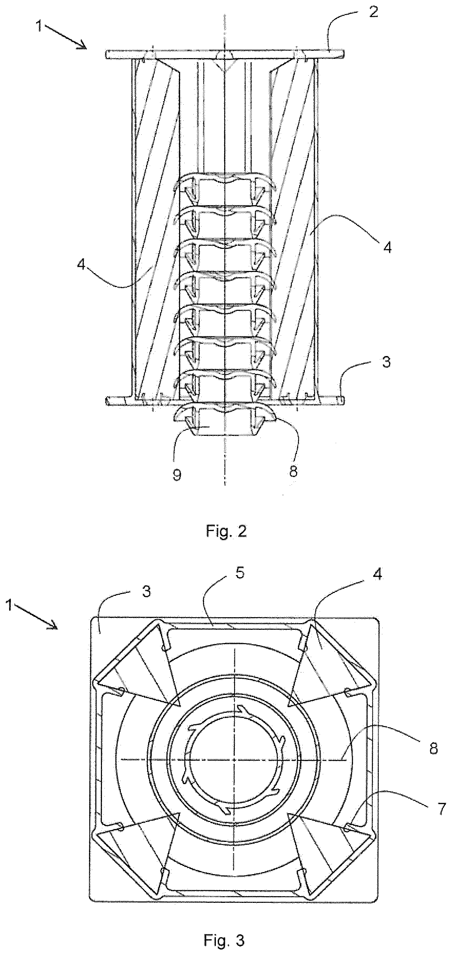

In Figur 1 ist ein Ausführungsbeispiel einer Stapelvorrichtung 1 für Stopfen 9 in einer perspektivischen Ansicht dargestellt, Figur 2 zeigt einen diesbezüglichen seitlichen Querschnitt. Die Stapelvorrichtung 1 weist ein achteckiges Gehäuse 5 auf, an dessen axialen Enden jeweils quadratische Platten 2, 3 vorgesehen sind. Die Platten 2, 3 können einstückig an dem Gehäuse 5 ausgebildet oder als zusätzliches Bauteile daran befestigt sein. Beide Platten 2, 3 weisen auf ihrer nach außen gerichteten Vorderseite jeweils eine Öffnung 10 auf, die im Durchmesser größer ist als derjenige der Stopfen 9. An der Innenwand des Gehäuses 5 erstrecken sich in axialer Richtung durchgängig vier aus Schaumstoff gebildete und im Querschnitt dreieckige Halte- und Führungsmittel 4, welche die Stopfen 9 gestapelt in Position halten, dabei aber eine Axialbewegung der Stopfen 9 zulassen und diese während ihrer Axialbewegung sowohl bei der Befüllung als auch der Entnahme in axialer Richtung zu führen. Die Stopfen 9 weisen einen Kopf 8 auf, mit dem sie in die Halte- und Führungsmittel 4 eingreifen. Die Halte- und Führungsmittel 4 erstrecken sich über die gesamte axiale Länge des Gehäuses 5 und zeigen mit ihren Dreiecksspitzen zur axialen Mittellinie der Stapelvorrichtung 1. Im Bereich der Öffnung 10 an der Platte 2 sind die Halte- und Führungsmittel 4 angeschrägt. An der Umfangskante der Öffnung 10 sind für jedes Halte- und Führungsmittel 4 Kerben 6 eingestanzt, über die die Halte- und Führungsmittel 4 in das Gehäuse 5 einführbar sind und daran auch gehalten werden können.

Figur 2 zeigt einen Stopfen 9 noch außerhalb der Stapelvorrichtung 1. Diese wird vertikal nach unten geführt, um den Stopfen 9 ins Innere des Gehäuses 5 zu drücken und den Stopfenstapel auf acht Stopfen 9 zu vergrößern. Anschließend wird der nächste nicht dargestellte Stopfen eingedrückt. Der Vorgang wird wiederholt, bis die gewünschte Stopfenzahl erreicht ist. Zur leichteren Handhabung wird der einzudrückende Stopfen 9 auf eine nicht dargestellte Stopfenhalteeinrichtung aufgelegt, die einen in vertikaler Richtung vorspringenden Abschnitt aufweist. Der vorspringende Abschnitt mit dem aufliegenden Stopfen 9 ist durch die Stapelvorrichtung 1, insbesondere die Öffnung 10 überstülpbar, so dass der Stopfen 9 in axialer Richtung ins Innere des Gehäuses 5 gedrückt wird. Eine Stopfenhalteeinrichtung kann zusätzlich Mittel zum Ausrichten der Lage des Stopfens 9 gegenüber der Stapelvorrichtung 1 aufweisen, so dass die Position zueinander unzweideutig bestimmt ist und der Stopfen 9 stets in derselben Position in die Stapelvorrichtung 1 gedrückt wird. Die Stopfen 9 liegen dadurch exakt in einer axialen Linie.

Figur 3 zeigt die Stapelvorrichtung 1 aus Figur 2 in einer Ansicht von unten. An dem Gehäuse 5 sind für jedes Halte- und Führungsmittel 4 einstückig jeweils zwei Hakenelemente 7 ausgebildet, die in das Halte- und Führungsmittel 4 eingreifen und es an dem Gehäuse 5 befestigen. Die Hakenelemente 7 weisen sich im Wesentlichen zur axialen Mittellinie der Stapelvorrichtung 1 erstreckende Stege mit an ihrem Ende in das jeweilige Halte- und Führungsmittel 4 einhakenden Randabschnitten auf.

Zum Herausnehmen des Stopfenstapels fährt das Werkzeug in die Öffnung 10, verdrängt die Halte- und Führungsmittel 4, greift den Stopfenstapel und zieht ihn heraus.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können auch andere als die genannten Formen für die Halte- und Führungsmittel eingesetzt oder unterschiedliche Formen gemischt werden.

## Patentansprüche

1. Stapelvorrichtung (1) für Stopfen (9), insbesondere Lack- oder Montagestopfen für Kraftfahrzeuge, mit einem Gehäuse (5), das an zumindest einem axialen Ende an einer Vorderseite eine Öffnung (10) aufweist, und in dem sich in axialer Richtung an einer Innenwand des Gehäuses mindestens zwei Halte- und Führungsmittel (4) für die Stopfen erstrecken, die ausgebildet sind, die Stopfen gestapelt in Position zu halten, eine Axialbewegung der Stopfen zuzulassen und diese in axialer Richtung zu führen, wobei an beiden axialen Enden des Gehäuses eine Platte (2, 3) mit jeweils einer Öffnung an der Vorderseite vorgesehen ist.

2. Stapelvorrichtung (1) nach Anspruch 1, **dadurch gekennzeichnet, dass** das Gehäuse einen achteckigen Querschnitt aufweist.

3. Stapelvorrichtung (1) nach Anspruch 1 oder 2, **dadurch gekennzeichnet, dass** insgesamt vier Halte- und Führungsmittel vorgesehen sind, von denen jeweils zwei sich gegenüberliegend angeordnet sind.

4. Stapelvorrichtung (1) nach zumindest einem der vorigen Ansprüche, **dadurch gekennzeichnet, dass** die Halte- und Führungsmittel aus Schaumstoff gebildet sind.

5. Stapelvorrichtung (1) nach zumindest einem der vorigen Ansprüche, **dadurch gekennzeichnet, dass** die Halte- und Führungsmittel einen dreieckigen oder ovalen Querschnitt aufweisen und sich im Wesentlichen über die gesamte axiale Länge des Gehäuses erstrecken.

6. Stapelvorrichtung (1) nach dem vorigen Anspruch, **dadurch gekennzeichnet, dass** eine Spitze des dreieckigen Querschnitts der jeweiligen Halte- und Führungsmittel jeweils in Richtung einer axialen Mittellinie der Stapelvorrichtung weist.

7. Stapelvorrichtung (1) nach zumindest einem der vorigen Ansprüche, **dadurch gekennzeichnet, dass** die Öffnung in einer quadratischen Platte gebildet ist, die an einem axialen Ende des Gehäuses befestigt ist.

8. Stapelvorrichtung (1) nach zumindest einem der vorigen Ansprüche, **dadurch gekennzeichnet, dass** die Öffnung an ihrer Umfangskante Kerben (7) aufweist, in denen das Halte- und Führungsmittel gehalten ist.

9. System zum Stapeln von Stopfen (9), insbesondere Lack- oder Montagestopfen für Kraftfahrzeuge, bestehend aus einer Stapelvorrichtung (1) nach zumindest einem der vorigen Ansprüche und einer Stopfenhalteeinrichtung, die einen vorspringend Abschnitt aufweist, auf dem mindestens ein Stopfen unbefestigt auflegbar sind, wobei der vorspringende Abschnitt mit dem aufliegenden Stopfen von der mindestens einen Öffnung überstülpbar und mit dem Stopfen in axialer Richtung in ein Inneres des Gehäuses der Stapelvorrichtung einführbar ist, wobei der Stopfen durch die Halte- und Führungsmittel im Inneren des Gehäuses gehalten wird während die Stapelvorrichtung von der Stopfenhalteeinrichtung wegbewegt wird.

## Claims

1. A stacking device (1) for plugs (9), especially paint plugs or assembly plugs for motor vehicles, with a housing (5) which has an opening (10) at at least one axial end on a front side, and in which at least two holding and guide means (4) for the plugs extend in the axial direction on an internal wall of the housing, which means are designed to hold the plugs stacked in position, to permit an axial movement of the plugs and to guide them in the axial direction, wherein a plate (2, 3) with in each case one opening on the front side is provided on both axial ends of the housing.

2. A stacking device (1) according to Claim 1, **characterised in that** the housing has an octagonal cross-section.

3. A stacking device (1) according to Claim 1 or Claim 2, **characterised in that** a total of four holding and guide means are provided, of which in each case two are arranged opposite each other.

4. A stacking device (1) according to at least one of the preceding claims, **characterised in that** the holding and guide means are formed from foam.

5. A stacking device (1) according to at least one of the preceding claims, **characterised in that** the holding and guide means have a triangular or oval cross-section and extend substantially over the entire axial length of the housing.

6. A stacking device (1) according to the preceding claim, **characterised in that**
a tip of the triangular cross-section of the respective holding and guide means points in each case in the direction of an axial centre line of the stacking device.

7. A stacking device (1) according to at least one of the preceding claims, **characterised in that** the opening is formed in a square plate which is fastened to an axial end of the housing.

8. A stacking device (1) according to at least one of the preceding claims, **characterised in that** the opening has on its peripheral edge notches (7) in which the holding and guide means is held.

9. A system for stacking plugs (9), especially paint plugs or assembly plugs for motor vehicles, consisting of a stacking device (1) according to at least one of the preceding claims and a plug holding device which has a projecting portion on which at least one plug can be placed in unsecured manner, wherein the projecting portion with the plug lying on it can be fitted over by the at least one opening and can be introduced with the plug in the axial direction into an interior of the housing of the stacking device, wherein the plug is held in the interior of the housing by the holding and guide means while the stacking device is moved away from the plug holding device.

## Revendications

1. Dispositif d'empilage (1) d'obturateurs (9) en particulier d'obturateurs de peinture ou de montage destinés à des véhicules qui comporte un boîtier (5) comprenant une ouverture (10) sur une face avant à au moins une extrémité axiale, et dans lequel s'étendent en direction axiale, sur sa paroi interne au moins deux moyens de retenue et de guidage (4) des obturateurs qui sont réalisés pour permettre de maintenir les obturateurs empilés, permettre leur déplacement axial et permettre de les guider en direction axiale, aux deux extrémités axiales du boîtier étant positionnée une plaque (2, 3) ayant respectivement une ouverture sur sa face avant.

2. Dispositif d'empilage (1) conforme à la revendication 1,
**caractérisé en ce que**
le boîtier à une section à huit coins.

3. Dispositif d'empilage (1) conforme à la revendication 1 ou 2,
**caractérisé en ce qu'**il
est prévu en tout quatre moyens de retenue et de guidage dont deux sont respectivement situés en regard.

4. Dispositif d'empilage (1) conforme à au moins l'une des revendications précédentes,
**caractérisé en ce que**
les moyens de retenue et de guidage sont réalisés en un matériau sous forme de mousse.

5. Dispositif d'empilage (1) conforme à au moins l'une des revendications précédentes,
**caractérisé en ce que**
les moyens de retenue et de guidage ont une section triangulaire ou ovale et s'étendent essentiellement sur la totalité de la longueur axiale du boîtier.

6. Dispositif d'empilage (1) conforme à la revendication précédente,
**caractérisé en ce qu'**
un sommet de la section triangulaire de chaque moyen de retenue et de guidage pointe respectivement en direction de l'axe axial médian du dispositif d'empilage.

7. Dispositif d'empilage (1) conforme à au moins l'une des revendications précédentes,
**caractérisé en ce que** l'ouverture est formée dans une plaque carrée qui est fixée à une extrémité axiale du boîtier.

8. Dispositif d'empilage (1) conforme à au moins l'une des revendications précédentes,
**caractérisé en ce que**
l'ouverture comporte, sur ses bords périphériques des entailles (7) dans lesquelles est maintenu le moyen de retenue et de guidage.

9. Système d'empilage d'obturateurs (9) en particulier d'obturateurs de peinture ou de montage destinés à un véhicule constitué par un dispositif d'empilage (1) conforme à au moins l'une des revendications précédentes et un dispositif de retenue d'obturateurs qui comporte un segment en saillie sur lequel au moins un obturateur peut être posé en n'étant pas fixé, le segment en saillie pouvant être enfoncé à partir de l'ouverture avec l'obturateur posé et introduit avec cet obturateur en direction axiale à l'intérieur du boîtier du dispositif d'empilage, l'obturateur étant retenu par le moyen de retenue et de guidage à la partie interne du boîtier pendant que le dispositif d'empilage est extrait du dispositif de retenue d'obturateurs.
